# EUROPÄISCHE PATENTSCHRIFT

(11) **EP 3 625 043 B1**
(45) Veröffentlichungstag und Bekanntmachung des Hinweises auf die Patenterteilung: **11.01.2023**
(21) Anmeldenummer: 18723523.9
(22) Anmeldetag: 09.05.2018
(51) Int. Cl.: B32B 5/02, B32B 5/10, B32B 5/12, B32B 5/26, B32B 27/12, B32B 27/20, B32B 27/22, B32B 27/30

(54) **DICHTUNGSBAHN**
SEALING WEB
BANDE D'ÉTANCHEITÉ

(30) Priorität: 15.05.2017 DE 102017110497
(43) Veröffentlichungstag der Anmeldung: 25.03.2020
(73) Patentinhaber: BMI Group Danmark ApS, 9400 Nørresundby (DK)
(72) Erfinder: SIMONIS, Udo, 63549 Ronneburg (DE); HEVÖ, Katarina, 94603 Kolárovo (SK)
(74) Vertreter: Stoffregen, Hans-Herbert
(86) Internationale Anmeldenummer: PCT/EP2018/062064
(87) Internationale Veröffentlichungsnummer: WO 2018/210667

(56) Entgegenhaltungen:
- EP-A1- 1 304 410
- EP-A1- 1 741 551
- EP-A1- 3 156 447
- WO-A1-2009/138314

## Beschreibung

Die Erfindung bezieht sich auf eine Dichtungsbahn für einen Bauwerkbereich, wie Dach, Fassade, Keller, Becken, die äußere Schichten, die ein Grundpolymer, wie Polyvinylchlorid oder ein Polyvinylchlorid-Copolymer, und einen Weichmacher enthalten, sowie eine ein Glasvlies enthaltende Kombinationsträgereinlage aufweist. Da die Glasverstärkung aus einem Gewebe, Gelege, Gewirke oder Kombinationen daraus bestehen kann, können Kombinationsträgereinlagen daher auch als Gitter-Vlies-Verbund, Gelege-Vlies-Verbund, Gewebe-Vlies-Verbund bezeichnet werden.

Eine entsprechende Dichtungsbahn ist der WO 2009/138314 A1 zu entnehmen. Um eine gute Verarbeitbarkeit, eine hohe Kerbschlagfähigkeit bei niedrigen Temperaturen sowie eine hohe Witterungsbeständigkeit zu erzielen, ist vorgesehen, dass der Weichmacher ein Polymerweichmacher in Form eines Adipinsäurepolyester mit einem mittleren Molekulargewicht von 3.000 bis 12.000 ist. Polymere Weichmacher zeigen jedoch hinsichtlich Verarbeitbarkeit und Kosten erhebliche Nachteile. EP 3 156 447 A1 offenbart eine mehrschichtige Dichtungsbahn für einen Bauwerkbereich, die äußere Schichten PVC und einen Weichmacher enthalten, und eine Kombinationsträgereinlage aufweist. Der Weichmacher ist ein niedermolekularer Weichmacher, dessen Anteil in den das Grundpolymer enthaltenden äußeren Schichten beispielsweise 28% ist.

Der vorliegenden Erfindung liegt die Aufgabe zugrunde, eine Dichtungsbahn der eingangs genannten Art derart weiterzubilden, dass diese kostengünstig herstellbar ist, eine hohe

Dimensionsstabilität sowie ein geringes Schrumpfverhalten aufweist. Eine problemlose mechanische Befestigung soll ermöglicht werden.

Nach einem weiteren Aspekt soll die Dichtungsbahn eine überaus glatte oder leicht geprägte Oberfläche aufweisen.

Auch soll das Recyceln im Vergleich zu Bahnen, die Polyestereinlagen als Verstärkung aufweisen, besser bzw. einfacher sein.

Zur Lösung einer oder mehrere zuvor genannter Aspekte sieht die Erfindung im Wesentlichen vor, eine mehrschichtige Dichtungsbahn für einen Bauwerkbereich, wie Dach, Fassade, Keller, Becken, die äußere Schichten, die ein Grundpolymer, wie Polyvinylchlorid oder ein Polyvinylchlorid-Copolymer, und einen Weichmacher enthalten, und eine ein Glasvlies und eine Glasverstärkung enthaltende Kombinationsträgereinlage aufweist, wobei die Glasverstärkung aus der Gruppe Glasgewebe, Glasgelege, Glasgitter oder eine beliebige Kombination dieser besteht, und die Glasfasern des Glasfasergewebes, -geleges oder -gitters eine Verlegedichte oder Maschenweite von 2x2 bis 6x6 aufweisen, wobei der Weichmacher ein niedermolekularar Weichmacher ist, dessen Anteil in den das Grundpolymer enthaltenden äußeren Schichten zwischen 25 Gew.-% und 40 Gew.-% liegt, und insbesondere die Kombinationsträgereinlage mit einem Binder auf der Basis zumindest eines Materials aus der Gruppe Styrol-Butadien, Acrylat, PVC, EVA oder eine beliebige Kombination dieser imprägniert ist.

Ein Glasgitter bzw. eine Glasverstärkung kann bestehen aus einem Gewebe, Gelege, Gewirke oder Kombinationen daraus. Weitere Bezeichnungen für genannte Kombinationsträgereinlagen können Gitter-Vlies-Verbund, Gelege-Vlies-Verbund, Gewebe-Vlies-Verbund sein.

Der Unterschied zwischen Gewebe und Gelege besteht darin, dass ein Gewebe einen welligen Faserverlauf aufweist und ein Gelege einen gestreckten Faserverlauf. Gelege können dabei einlagig oder mehrlagig sein. Die Fasern in den Gelegen werden nicht miteinander verwebt.

Zur Lösung einer oder mehrere zuvor genannter Aspekte schlägt die Erfindung insbesondere vor eine mehrschichtige Dichtungsbahn für einen Bauwerkbereich, wie Dach, Fassade, Keller, Becken, die äußere Schichten, die ein Grundpolymer, wie Polyvinylchlorid oder ein Polyvinylchlorid-Copolymer, und einen niedermolekularen Weichmacher enthalten, und eine aus einem Glasvlies und einem Längs- und Querfäden aufweisenden Glasgelege, -gewebe oder -gitters besteht, welches ein Flächengebilde ist, das aus einer oder mehreren Lagen von parallel verlaufenden, gestreckten Fäden besteht. An den Kreuzungspunkten werden die Fäden üblicherweise fixiert. Die Fixierung erfolgt entweder durch Stoffschluss oder mechanisch durch Reibung und/oder Formschluss.

Es existieren folgende Arten von Fadengelegen:
- monoaxiale oder unidirektionale, die durch das Fixieren einer Schar von parallelen Fäden entstehen,
- biaxiale, bei denen zwei Scharen von parallelen Fäden in Richtung von zwei Achsen fixiert werden, multiaxial, bei denen mehrere Scharen aus parallelen Fäden in Richtung verschiedener Achsen fixiert werden.

Erfindungsgemäß wird eine Dichtungsbahn vorgeschlagen, die mehrschichtig aufgebaut ist, wobei eine innere Schicht durch die Kombinationsträgereinlage gebildet wird. Da diese aus Glasvlies und Glasgewebe, -gelege bzw. -gitter besteht, ergibt sich eine problemlose sichere mechanische Befestigung. Gleichzeitig ist eine hinreichende Dimensionsstabilität gegeben. Ein Schrumpfen durch Alterung wird im Vergleich zu bekannten Dachbahnen reduziert.

Die Erfindung sieht des Weiteren vor, dass insbesondere die Glasverstärkung, wie das Glasgewebe, -gelege bzw. -gitter, mit dem Glasvlies mittels Styrol-Butadien verbunden ist. Ausgehend von den Außenschichten, welche auf PVC-P basieren sollten, wird abweichend von dem Fachmann geläufigen Überlegungen SB Bindemittel verwendet. Genannt sei hier die Wechselwirkung bzw. Migration von flüchtigen oder flüssigen Bestandteilen aus der PVC-P basierten Außenschicht, z.B. Weichmacher, ESO, etc. mit dem in der Kombinationsträgereinlage angewendeten SB Bindemittels, welche die Eigenschaften des Bindemittels negativ beeinflussen können. Auch wenn sich durch die Verwendung von Styrol-Butadien die Fäden der Glasverstärkung von den angrenzenden Schichten lösen, wird hierdurch der Vorteil erzielt, dass höhere Windsogkräfte zum Lösen der Dichtungsbahn erforderlich sind, da zur Befestigung der Dichtungsbahn nicht ein aus mehreren Fäden beziehender Fadenstrang als Einheit, sondern mehrere Fäden wirken. Hierdurch sind größere Windsogkräfte zum Lösen der Dichtungsbahn erforderlich.

Es besteht aber auch die Möglichkeit, dass die Glasverstärkung, wie das Glasgewebe, -gelege oder -gitter, mit dem Glasvlies mittels Acrylat oder auf PVC basierenden Varianten - genannt seien hier PVC Dispersionen sowie PVC Plastisole - verbunden ist. Abweichend von vorbekannten Dichtungsbahnen wird in den Außenschichten als Weichmacher ein niedermolekularer Weichmacher, also ein Monomerweichmacher eingesetzt.

Ergibt sich eine hohe Dimensionsstabilität und ein geringes Schrumpfverhalten und insbesondere die gewünschte äußere glatte Struktur, wenn auf jeder Seite der Kombinationsträgereinlage nur eine äußere Schicht verläuft, so besteht auch die Möglichkeit, dass insbesondere bauwerkbereichfernliegend eine Zwischenschicht vorhanden ist, so dass sich eine Reihenfolge Außenschicht, Kombinationsträgereinlage, Zwischenschicht, Außenschicht ergibt. Die Zwischenschicht weist dabei eine Zusammensetzung auf, die weitgehend den äußeren Schichten entspricht. Unterschiede können sich bezüglich der Additive, insbesondere hinsichtlich UV-Stabilität und Farbpigmente, ergeben, wobei die Zwischenschicht geringere Additive, als die angrenzende äußere Schicht aufweisen kann.

Bevorzugterweise ist der niedermolekulare Weichmacher ein Weichmacher auf der Basis von Phthalat, insbesondere ein Weichmacher aus der Gruppe DPHP (Dipropylheptylphthalat) DINP (Diisonylphthalat), DIDP (Diisodecylphthalat). Der Weichmacher kann aber auch ein phthalatfreier Weichmacher, ein biobasierter Weichmacher oder ein teilweise biobasierter Weichmacher sein, wie diese beispielsweise in der EP3156447 beschrieben sind.

Eine Kombination der genannten Weichmacher kann in Weiterbildung der Erfindung ebenfalls möglich sein.

Insbesondere zeichnet sich die Erfindung dadurch aus, dass jede Schicht in Gew.-% enthält oder besteht aus:

| | |
|---|---|
| niedermolekularer Weichmacher | 25- 45, insbesondere 27 - 37 |
| Prozesshilfen, wie Gleitmittel | 0 - 1,9, insbesondere 0,1 - 1,50 |
| Füllstoff, wie Calciumcarbonat | 0 - 20, insbesondere 0 - 15 |
| PVC | 45 - 57, insbesondere 46 - 56 |
| Antioxidant | 0 - 0,2, insbesondere 0,1 - 0,2 |
| UV-Stabilisator | 0 - 0,23, insbesondere 0,1 - 0,23 |
| sonstige Stabilisierungsmittel | 1,5 - 1,8 |
| Farbpigmente außer TiO₂ | 0 - 0,14, insbesondere 0,005 - 0,10 |
| Titandioxid | 1,0 - 12, insbesondere 1 - 8 |
| Flammschutzadditive | 0 - 20, insbesondere 0 - 12 |

Sonstige Stabilisierungsmittel können aus organischen Thermostabilisatoren bestehen. Ein Einsatz solcher Stabilisatoren zeigt den Vorteil, dass auf ESO oder ESBO (Epoxidiertes Sojabohnenöl) als Co-Stabilisator in der Rezepturverzichtet werden kann.

Die Kombinationsträgereinlage ist mit einem Binder imprägniert, mittels dessen die Verbindung zu den angrenzenden Außenschichten bzw. der Außen- und Zwischenschicht erfolgt. Dabei besteht der Binder vorzugsweise auf der Basis zumindest eines Materials aus der Gruppe Styrol-Butadien, Acrylat, EVA und PVC oder Kombinationen daraus. Die PVC Variante ist insbesondere als Dispersion oder Plastisol anzuwenden.

Insbesondere ist Styrol-Butadien als Binder hervorzuheben, der trotz Weichmacheraufnahme nachteilige Auswirkungen auf die Dachbahnen nicht zeigt, auch nicht im Bereich der Knoten der sich kreuzenden Glasfasern. Ferner ist eine besonders einfache Recycelbarkeit aufgrund des mineralischen Trägers gegenüber Polyester gegeben.

Insbesondere bei EVA, PVC, Acrylat ergibt sich auch der Vorteil, dass die Haftfestigkeit zwischen der Kombinationsträgereinlage und den angrenzenden Schichten besonders hoch ist.

Die Verwendung der Kombinationsträgereinlage als Verstärkung hat auch überaschenderweise dazu geführt, dass die Dichtungsbahn eine überaus glatte Oberfläche aufweist.

Ebenfalls zeigt sich durch Verwendung der genannten Kombinationsträgereinlage eine Eliminierung der Zugspannungen im Endprodukt. Dies führt weiterhin zu einer stabilen Dickentoleranz der einzelnen Schichten, was es dem Hersteller ermöglicht, engere Dickentoleranzen der einzelnen Schichten einzuhalten.

Eine besondere Festigkeit bei gleichzeitig guter Verarbeitung ergibt sich dann, wenn das Glasvlies ein Flächengewicht zwischen 20 g/m² und 90 g/m² und/oder die Glasfasern des Glasvlieses eine Dicke zwischen 10 µm und 20 µm aufweisen.

Die Verlegedichte oder Maschenweiten oder Konstruktionen der Fasern des Glasfasergewebes, -geleges bzw. -gitters sollte zwischen 2x2 und 6x6 liegen oder Kombinationen daraus darstellen, wobei bevorzugt 3x3 - 4x4 zu wählen ist. 2x2 bedeutet, dass pro cm jeweils 2 Glasfäden sowohl in eine Richtung, als auch in einer quer zu dieser Richtung verlegt sind. Man spricht bei Fäden in Längsrichtung auch von Kettfäden und bei Fäden in Querrichtung dazu von Schussfäden. Entsprechendes gilt für 3x3 und 4x4 und 5x5 und 6x6.

Der Aufbau bzw. die Konstruktion bzw. Verlegedichte bzw. Maschenweite kann hierbei symmetrisch, quadratisch rechtwinklig oder asymmetrisch aufgebaut sein. Folgende Beispiele sollen die verschiedenen Aufbauten verdeutlichen:
- Ein quadratischer Aufbau beispielsweise 2x2, d.h. 2 Fäden/cm in Längs- sowie in Querrichtung, d.h. 2 Kettfäden/cm und 2 Schussfäden/cm.
- Ein rechtwinkliger Aufbau wäre beispielsweise 2×1, d.h. 1 Faden/cm in Längsrichtung und 2 Fäden/cm in Querrichtung, d.h. 1 Kettfaden/cm und 2 Schussfäden/cm.
- Ein asymmetrischer Aufbau wäre beispielsweise 2x2 RV (Randverstärkung), d.h. 2 Fäden/cm in Längs- sowie in Querrichtung, wobei der Randbereich des Gitters in Querrichtung 4 anstatt 2 Fäden/cm aufweist, d.h. 2 Kettfäden/cm und 2 Schussfäden/cm, wobei im Randbereich 4 anstatt 2 Kettfäden/cm vorhanden sind.

Weiterhin können ebenfalls Kettfäden doppelt oder in mehrfacher Form angeordnet sein, wobei diese in Schussfäden entsprechend nicht die gleiche Zahl darstellen müssen.

Weiterhin können zwischen Schuss- und Kettfaden verschiedene Fadenabmaße verwendet werden, wie z.B. verschiedene Durchmesser oder verschiedene Stoffgruppe, z.B. Polyester und Glas, wobei mindestens einer der beiden Fäden auf Glas basieren sollte.

In einer weiteren Ausführungsform ist das Glasvlies in den Rand- oder Mittelbereichen der Glasvliesbreite mit Verstärkungsfäden - ebenfalls basierend auf Glasfäden oder PES (Polyester) Fäden, d.h. v.a. in Längsrichtung der Dachbahn - ausgebildet. Diese Anwendungsform ist bevorzugt für hohe Windlastbereiche, d.h. besonders in Küstengebieten, und der damit höher auftretenden Kräfte bzw. Krafteinleitungspunkte in die Dachbahn anwendbar.

Der Randbereich ist auf 1 bis 20 cm von der Außenkante der Längsrichtung der Membran festgelegt, wobei die bevorzugte Breite bis ca. 6 cm ist. Weiterhin können so 4 bis 20 Verstärkungsfasern, bevorzugt 4 bis 10 Verstärkungsfasern, im Abstand von max. 50 mm, vorzugsweise 5 bis 10 mm angeordnet sein. Die Abstände werden so gewählt, dass die Befestigungsteller - welche von Schrauben oder Nägeln durchsetzt sind - um die Dachbahn auf dem Substrat bzw. Untergrund zu fixieren und dem Substrat bzw. Untergrund mindestens 3 Verstärkungsfasern verlaufen um die mechanische Verstärkung sicherzustellen.

Ferner ist vorgesehen, dass das Gewicht der Fasern des Glasgewebes oder -gitters 30 tex bis 80 tex, bevorzugt 50 bis 80 tex, beträgt.

Das Gesamtflächengewicht der Kombinationsträgereinlage sollte zwischen 80 g/m² und 200 g/m², bevorzugt zwischen 100 g/m² und 120 g/m², liegen.

Die Dichtungsbahn selbst sollte ein Flächengewicht zwischen 1,4 kg/m² und 2,6 kg/m², vorzugsweise zwischen 1,5 kg/m² und 1,9 kg/m², aufweisen.

Dabei ist bevorzugterweise eine Dicke der Dichtungsbahn zwischen 1,0 mm und 2,5 mm, vorzugsweise zwischen 1,2 mm und 2,0 mm, vorgesehen.

Die erfindungsgemäße Dichtungsbahn zeichnet sich insbesondere auch durch die Zugfestigkeit [N/50mm] in Längsrichtung mit mindestens 1250, vorzugsweise mindestens 1000, besonders bevorzugt mit 1150 bis 1180, und/oder in Querrichtung mit mindestens 800, vorzugsweise mindestens 1000, besonderes bevorzugt mit 1080 bis 1110 aus, gemessen gemäß EN 12311-2.

Ferner beträgt die Weiterreißfestigkeit [N] in Längsrichtung zwischen 180 und 250 und in Querrichtung zwischen 210 und 300, gemessen gemäß EN 12310-2.

Längsrichtung ist die Richtung, in der die Dichtungsbahn bei der Herstellung transportiert wird. Querrichtung ist die hierzu senkrecht verlaufende Richtung.

Um zu verhindern, dass die Verbindungspunkte des Glasgewebes, -geleges bzw. -gitters zur Außenseite der Dichtungsbahn hin Erhebungen bilden, sieht die Erfindung vor, dass das Glasvlies entlang bauwerkseitig abgewandter Außenseite des Glasgewebes, -geleges oder -gitters verläuft.

Bei einer dem Fachmann bekannten Dachbahn, welche eine Gitterverstärkung bzw. - einlage aufweist - d.h. ohne die erfindungsgemäße Kombinationsträgereinlage aus Glasfasern in Form eines Vlieses sowie eines Glasgitters bzw. eine Glasverstärkung bestehend aus einem Gewebe, Gelege oder Kombinationen daraus bzw. des verwendeten Glasvlies der Kombinationsträgereinlage - können die Verbindungspunkte an die Oberfläche der Dachbahn treten und zu einer Strukturierung der Oberfläche führen. Dies bedeutet für den Fachmann auftretende Kanäle, Einsinkstellen oder Pfützen in welchen sich vor allem Schmutz, Wasser, Algen, Insekten, u.a. ansammeln können. Durch die Wechselwirkung der aufgefangenen Substanzen bzw. Organismen mit der Dachbahn bzw. die in der Dachbahn enthaltenen Bestandteile, z.B. der Weichmacher, kann eine beschleunigte Alterung, besonders in den Randbereichen dieser Reservoirs bzw. Kanäle entstehen, welche eine kürzere Lebenszeit bzw. Nutzdauer der Dachbahn mit sich bringen.

Dieser Effekt wird mit dem erfindungsgemäßen Einsatz der Kombinationsträgereinlage aus Glasfasern in Form eines Vlieses sowie eines Glasgitters bzw. eine Glasverstärkung bestehend aus einem Gewebe, Gelege oder Kombinationen daraus umgangen, da sich hier eine solche genannte Struktur nicht in der Oberfläche abbilden kann.

Die Verwendung einer Kombinationsträgereinlage bestehend aus Glasgitter bzw. eine Glasverstärkung bestehend aus einem Gewebe, Gelege oder Kombinationen daraus mit einem Glasvlies bewirkt eine Verbesserung des Brandverhaltens der Verstärkung bzw. Einlage bzw. der Dachbahn bzw. des kompletten Dachaufbaus, welches entsprechend der CEN/TS 1187:2012 "Beanspruchung von Bedachungen durch Feuer von außen" nachgewiesen werden kann.

Als weiteren positiven Aspekt ist die verbesserte Verschweißbarkeit der Dachbahn anzusprechen. Dies liegt besonders an der glatten und wellenfreien Beschaffenheit der Dachbahn. Bei der Verschweißung mittels Schweißautomaten wirkt sich dies entsprechend auf weniger Fehlstellen, d.h. Stellen, welche nachträglich händisch mittels Heißluft-Handgeräten als zusätzlichen Arbeitsaufwand ebenfalls materialhomogen verschlossen werden müssen, aus. Dies ermöglicht eine bessere Handhabung sowie zeitoptimierte Verlegequalität der Dachbahn.

Des Weiteren ist vorgesehen, dass die Dichtungsbahn eine oder mehrere Zusätze bzw. Additive aus der Gruppe Füllstoffe, Pigmente, Farbstoffe, UV-Stabilisatoren, Thermostabilisatoren, Biozide, Flammschutzadditive enthält.

Zusätze in den Schichten sollten entsprechend der gewünschten Wirkung in ihren Anteilen unterschiedlich sein. So sollten in der Außenschicht bzw. in äußeren Schichten, die bei verlegter Dachbahn oberhalb der Kombinationsträgereinlage verlaufen, die Anteile an UV-Stabilisatoren und/oder Thermostabilisatoren und/oder Fungizide größer als in der unterhalb der Kombinationsträgereinlage verlaufenden Schicht bzw. Schichten sein.

Bevorzugterweise ist vorgesehen, dass oberhalb der Kombinationsträgereinlage eine oder zwei Schichten, die das Grundpolymer und den Monomerweichmacher enthalten, und unterhalb der Kombinationsträgereinlage, also bauwerkseitig, eine Schicht verlaufen, wobei erwähntermaßen die Anteile der Zusätze in den einzelnen Schichten variieren können.

Verfahrenstechnisch kann die erfindungstechnische Dachbahn mittels eines oder mehrerer Glättgestells(e) im (Co-)Extrusions- oder Kalanderverfahren oder durch Plastisol-Streichverfahren hergestellt werden. Die Kombinationsträgereinlage kann in einem vorgeordneten Schritt hergestellt oder als separate Glasvlies und Glasgittereinlage dem Verfahren zugeführt werden.

Weitere Einzelheiten, Vorteile und Merkmale der Erfindung ergeben sich nicht nur aus den Ansprüche, den diesen zu entnehmenden Merkmalen, für sich und/oder in Kombination, sondern auch aus der nachfolgenden Beschreibung von bevorzugten Ausführungsbeispielen.

Es zeigen:
- Fig. 1: einen Abschnitt einer Dichtungsbahn,
- Fig. 2: ein Glättgestell - auch Kalander, Kalandereinheit oder Walzenglättwerk genannt - zur Herstellung der Dichtungsbahn gemäß Fig. 1.,
- Fig. 3: einen Ausschnitt eines Geleges basierend auf einer Einfachkette,
- Fig. 4: einen Ausschnitt eines Geleges basierend auf einer Doppelkette,
- Fig. 5: einen Ausschnitt aus einem Gelege-Vlies-Verbund und
- Fig. 6: einen Ausschnitt eines Geleges mit einer Verlegedichte oder Maschenweite von 2x2.

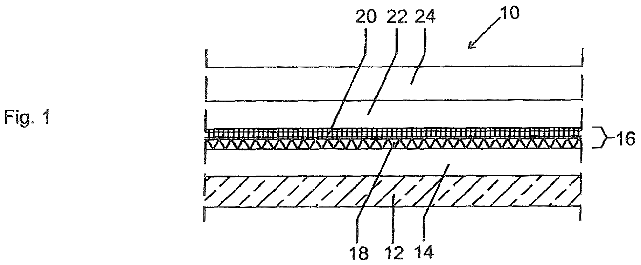

In der Fig. 1 ist im Schnitt ein Abschnitt einer erfindungsgemäßen Dichtungsbahn 10 dargestellt, die im Baubereich verwendet wird, wie z.B. zur Abdichtung von Dächern, Verkleidung von Fassaden, Auskleiden von Becken oder Auskleiden von Kellern.

Die Dichtungsbahn 10 verläuft im Ausführungsbeispiel auf einem Dach 12 und besteht aus einer unteren Schicht 14, die dachseitig, also bauwerkbereichseitig verläuft. Auf der unteren Schicht 14 befindet sich eine Kombinationsträgereinlage 16, die ihrerseits aus einer dachseitig verlaufenden, Fäden aufweisenden Glasverstärkung 18, wie Glasgewebe, - gelege oder -gitter oder Kombinationen daraus, und dachfernliegend aus einem Glasvlies 20 besteht.

Nachstehend werden die Begriffe Glasverstärkung, Glasgewebe, Glasgelege, Glasgitter allein oder in Kombination verwendet, sollen jedoch jeweils jedwede Gestaltung miterfassen.

Auf der Kombinationsträgereinlage 16 sind sodann zwei Schichten 22, 24 angeordnet, die - wie die untere Schicht 14 - Weich-PVC (Polyvinylchlorid) und einen Monomerweichmacher sowie einen oder mehrere Additive wie Füllstoffe, Pigmente, Farbstoffe, UV-Stabilisatoren, Thermostabilisatoren und Biozide enthalten oder aus diesen bestehen. Dabei liegt der Gewichtsanteil des Monomerweichmachers in der jeweiligen Schicht 14, 22, 24 zwischen 25 Gew.-% und 40 Gew.-%, vorzugsweise zwischen 25 Gew.-% und 37 Gew.-%, insbesondere zwischen 27 Gew.-% und 35 Gew.-%.

Als Monomerweichmacher wird bevorzugterweise ein solcher auf Basis von Phthalat eingesetzt, insbesondere ein Weichmacher aus der Gruppe DPHP (Dipropylheptylphthalat) DINP (Diisonylphthalat), DIDP (Diisodecylphthalat), eingesetzt. Der Weichmacher kann aber auch ein phthalatfreier Weichmacher, ein biobasierter Weichmacher oder ein teilweise biobasierter Weichmacher sein.

Insbesondere zeichnet sich die Erfindung dadurch aus, dass jede Schicht 14, 22, 24 in Gew.-% enthält:

| | |
|---|---|
| niedermolekularer Weichmacher | 25- 45, insbesondere 27 - 37 |
| Prozesshilfen | 0 - 1,9, insbesondere 0,1 - 1,50 |
| Füllstoff | 0 - 20, insbesondere 0 - 15 |
| PVC | 45 - 57, insbesondere 46 - 56 |
| Antioxidantien | 0 - 0,2, insbesondere 0,1 - 0,2 |
| UV-Stabilisator | 0 - 0,23, insbesondere 0,1 - 0,23 |
| sonstige Stabilisierungsmittel | 1,5 - 1,8 |
| Farbpigmente außer TiO₂ | 0 - 0,14, insbesondere 0,005 - 0,10 |
| Titandioxid | 1,0 - 12, insbesondere 1 - 8 |
| Flammschutzadditive | 0 - 20, insbesondere 0 - 12 |

Insbesondere ist vorgesehen, dass der Titandioxid-Anteil in der oberen Schicht 24 größer als der in der mittleren Schicht 22 ist. Der Titandioxid-Anteil der unteren Schicht 12 ist wiederum geringer als der der mittleren Schicht 22.

Ferner können sowohl die mittlere Schicht 22 als auch die untere Schicht 12 frei von Antioxidantien und Stabilisatoren einschließlich UV-Stabilisatoren sein.

Der Anteil von Calciumcarbonat kann in der unteren Schicht 14 größer als der in der mittleren Schicht 22 und dieser wiederum größer als der in einer oberen Schicht 24 sein.

Das Glasvlies 20 der Kombinationsträgereinrichtung 16 weist ein Flächengewicht zwischen 30 g/m² und 90 g/m² auf.

Die Glasfasern des Glasvlieses oder -gitters oder -gewebes, also der Glasverstärkung 18, sollten eine Dicke zwischen 13 µm und 18 µm aufweisen. Die Glasfasern des Glasgewebes, -geleges bzw. -gitters zeichnen sich durch ein Gewicht von 60 tex bis 80 tex aus.

Ferner sollte die Verlegedichte oder Maschenweiten oder Konstruktionen der Fasern des Glasgewebes, -geleges bzw. des -gitters 3x3 bis 4x4 betragen.

Das Flächengewicht der Dichtungsbahn 10 sollte zwischen 1,4 kg/m² und 2,6 kg/m² liegen, wobei als Dicke bevorzugterweise 1,2 mm bis 2,0 mm anzugeben ist.

Die Schichten 14 einerseits und 22, 24 andererseits werden auf die Kombinationsträgereinlage 16, insbesondere durch Kalandrierung, Streichverfahren oder Extrusion, aufgebracht.

Insbesondere ist vorgesehen, dass die Schichten 22, 24 durch Coextrusion und die Schicht 14 durch Extrusion mit einer Einkanaldüse hergestellt werden.

In einem einzigen Glättgestell - auch Kalander, Kalandereinheit oder Walzenglättwerk genannt - werden sodann die coextrudierten Schichten 22, 24 und die Schicht 14 mit der zwischen diesen verlaufenden Kombinationsträgereinlage 16 verbunden. Alle Prozessschritte werden mit einem einzigen Glättgestell abgebildet.

Glasvlies 20 und Glasgewebe, -gelege bzw. -gitter 18 sind mit einem Bindemittel imprägniert, das zumindest aus einem Material aus der Gruppe Styrol-Butadien, Acrylat, PVC, EVA besteht oder dieses enthält. Mittels des Bindemittels werden die Kombinationsträgereinlagen mit den angrenzenden Schichten 14, 22 verbunden.

Entsprechend hergestellte Dichtungsbahnen 10 weisen eine Zugfestigkeit in N/50mm in Längsrichtung von zumindest 800, vorzugsweise von etwa 1150 bis 1250 und in Querrichtung von zumindest 800, vorzugsweise in etwa 1080 bis 1100 auf, wobei die Messung gemäß EN 12311-2 erfolgt.

Die Höchstzugkraftdehnung liegt in Längs- und in Querrichtung bei ca. 2 - 5 %, gleichfalls gemessen gemäß E 12311-2.

Die Weiterreißfestigkeit nach EN 12310-2 beläuft sich in Längsrichtung auf ca. 220 N und in Querrichtung auf ca. 270 N.

Die Nagelreißfestigkeit nach EN 123010-1 beläuft sich in Längsrichtung auf ca. 320 N und in Querrichtung auf ca. 375 N.

Hinsichtlich der Dimensionsstabilität ergaben sich gemäß EN 1107-2 die Werte in Längsrichtung - 0,07 % und in Querrichtung - 0,07 %.

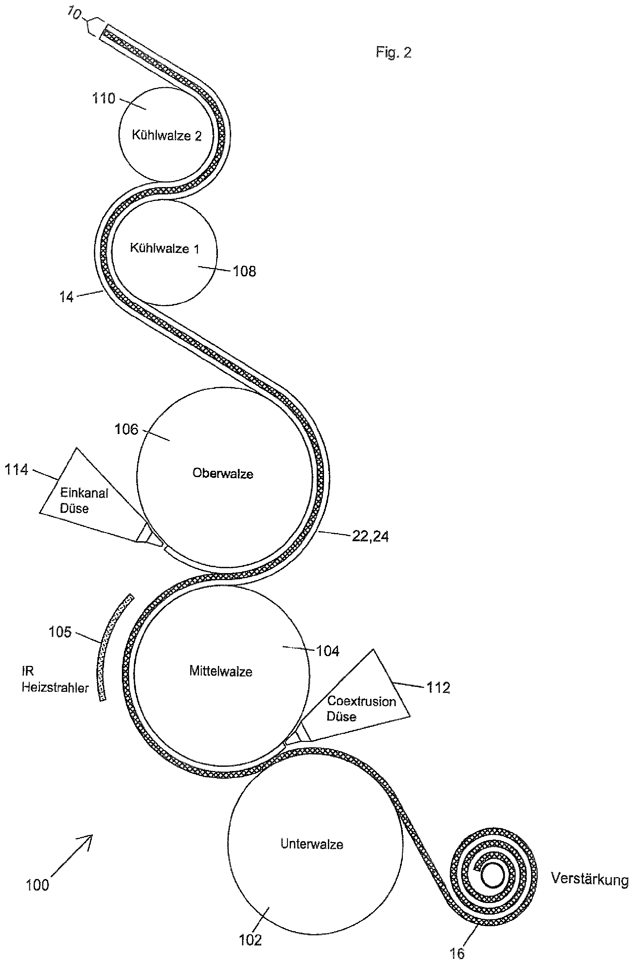

In der Fig. 2 ist ein Glättgestell 100 rein prinzipiell dargestellt, mit der eine erfindungsgemäße Dichtungsbahn im Extrusions- oder Kalandrierverfahren hergestellt werden kann.

Das Glättgestell 100 umfasst eine untere Rolle oder Walze 102, eine mittlere Rolle oder Walze 104 sowie eine obere Rolle oder Walze 106. Ferner sind im Ausführungsbeispiel zwei Kühlwalzen 108, 110 vorgesehen.

Das Glättgestell 100 weist des Weiteren eine Coextrusionsdüse 112 sowie eine Einkanalextrusionsdüse 114 auf, die jeweils mit einem entsprechenden Extruder verbunden sind.

Zur Herstellung der Dachbahn 10 wird die Kombinationsträgereinlage 16 von einem Wickel abgezogen und zwischen den Rollen oder Walzen 102, 104, 106 geführt. Nach der unteren und mittleren Walze 102, 104 und bevor die Kombinationsträgereinlage 16 zwischen den Walzen 104 und 106 hindurch geführt wird, werden mittels der Extrusionsdüse 112 die mittlere Schicht 22 und die äußere Schicht 24 aufgetragen. Nach dem Durchtritt zwischen der unteren und mittleren Walze 102, 104 wird z.B. mit einem IR-Heizstrahler 105 Wärme appliziert. Sodann wird auf der gegenüberliegenden Seite der Kombinationsträgereinlage 16 sodann die untere Schicht 114 mittels der Extrusionsdüse 114 aufgetragen. Die so hergestellte Dachbahn 10 wird sodann zwischen der mittleren Walze 104 und der oberen Walze 106 und schließlich um die Kühlwalzen 108 und 110 geführt.

Durch den Einsatz der Kombinationsträgereinlage 16 werden bei der Extrusion der unteren Schicht 114 die beiden anderen bereits extrudierten Schichten, mittlere Schicht 22 und die äußere Schicht 24, vor einem erneuten hohen Wärmeeintrag geschützt. Dies wirkt sich positiv auf die Alterung der mittleren Schicht 22 und der oberen Schicht 24 aus. Dies kann mittels des Yellownes Index nachgewiesen werden.

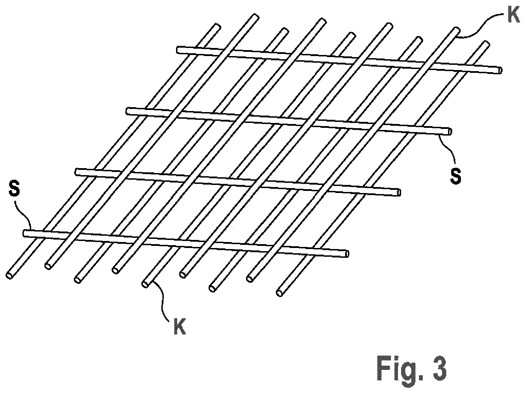

Verschiedene Arten des Verlaufs der Glasfäden der Glasverstärkung in Form eines Geleges sind den Fig. 3 bis 6 zu entnehmen.

So ist der Fig. 3 ein Ausschnitt des Geleges in Form einer Einfachkette dargestellt. Unterund oberhalb der Schussfäden verlaufen die Kettfäden, wobei Ober- und Unterkette in einem definierten Abstand voneinander versetzt sind. Auf einem Kettfaden unter dem Schussfaden folgt in regelmäßigem Abstand ein Kettfaden über dem Schussfaden. Am Kreuzungspunkt treffen sich jeweils zwei Fäden.

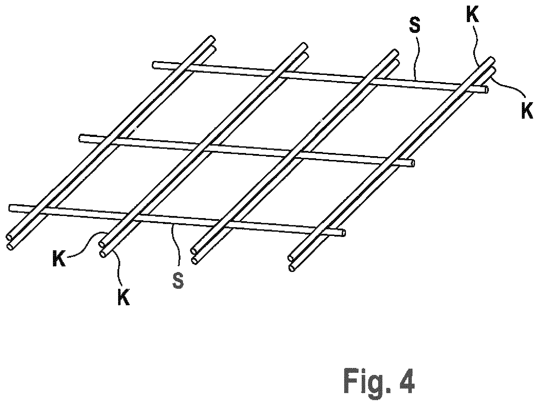

Der Fig. 4 ist eine Doppelkette zu entnehmen, bei der Kettfäden übereinanderliegen, das heißt, Ober- und Unterkette liegen immer übereinander, so dass die Schussfäden zwischen den Fäden der Ober- und Unterkette verlaufen. Am Kreuzungspunkt treffen somit drei Fäden zusammen.

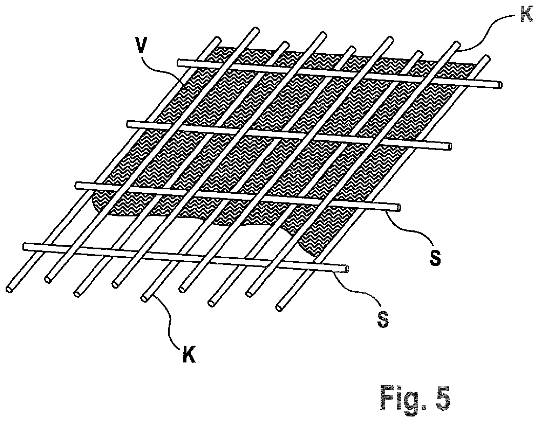

Fig. 5 zeigt einen Ausschnitt einer Glasverstärkung in Form eines Geleges mit einem Vlies. Das Gelege kann zum Beispiel eine Einfach- oder eine Doppelkette - im Ausführungsbeispiel eine Einfachkette - sein. Das Gelege wird sodann auf das Glasvlies kaschiert.

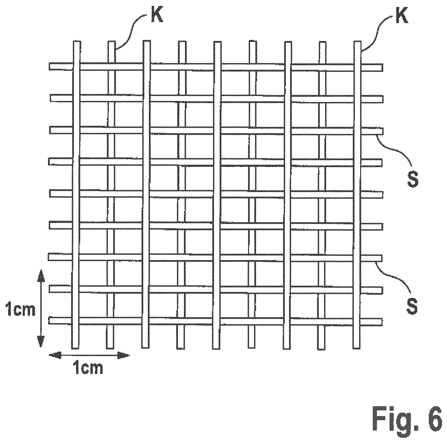

Fig. 6 stellt noch einmal eine Einfachkette entsprechend der Fig. 3 dar. Wie in sämtlichen Zeichnungen sind die Kettfäden mit K und die Schussfäden mit S gekennzeichnet. Durch die Längenangabe wird des Weiteren die Verlegedichte bzw. Maschenweite verdeutlicht.

Die Maschenweite oder Verlegedichte beträgt im Ausführungsbeispiel der Fig. 6 *2x2*, das heißt, 2 Kettfäden sind vorhanden.

Insbesondere ist vorgesehen, dass die Kettfäden K in Längsrichtung einer Dachbahn und die Schussfäden S senkrecht zu den Kettfäden K verlaufen. Hierdurch ergeben sich insbesondere nachstehende Vorteile.

Werden auf einer Baustelle zum Beispiel Zuschnitte einer Dachbahn benötigt, d.h. Bahnstücke, die nicht der produzierten Breite entsprechen, also schmaler sind, so muss ein Dachdecker die Bahn auf die gewünschte Dimension zuschneiden. Üblicherweise werden hierzu zumindest zwei Punkte auf der Dachbahn aufgebracht, um eine Gerade zu ziehen.

Aufgrund des erfindungsgemäßen Verlaufs der Kettfäden ist insoweit eine Vereinfachung gegeben, dass es nur erforderlich ist, dass am Querrand entsprechend der gewünschten Breite ein kleiner Schnitt eingebracht wird, um sodann die Dachbahn durch Reißen über die gewünschte Länge zu teilen oder z.B. einen Streifen aus dem Mittenbereich herauszureißen. In diesem Fall müssten zwei Schnitte getätigt werden.

Das "Reißen" erfolgte dank des in Längsrichtung der Dachbahn verlaufenden Kettfadens und bildet eine gerade Kante, die zwar ausgefranst ist, jedoch für den Dachdecker keine Probleme bildet, da diese beim Schweißen der Fügenaht als untere Bahn benutzt wird. Mit anderen Worten überdeckt eine Originalbahn mit sauberer Schnittkante die händisch vor Ort durch Reißen dimensionierte Bahn, ohne dass das Erscheinungsbild negativ beeinflusst wird. Außerdem ist eine möglicherweise auftretende Kapillarität der Verstärkung unterbunden, da keine freiliegenden Fäden auf der Dachoberseite vorhanden sind. Somit wird aufgrund der erfindungsgemäßen Lehre das Arbeiten eines Dachdeckers erleichtert.

## Patentansprüche

1. Mehrschichtige Dichtungsbahn (10) für einen Bauwerkbereich, wie Dach, Fassade, Keller, Becken, die äußere Schichten (14, 22, 24), die ein Grundpolymer, wie Polyvinylchlorid oder ein Polyvinylchlorid-Copolymer, und einen Weichmacher enthalten, und eine ein Glasvlies (20) und eine Glasverstärkung (18) enthaltende Kombinationsträgereinlage (16) aufweist, wobei die Glasverstärkung (18) aus der Gruppe Glasgewebe, Glasgelege, Glasgitter oder eine beliebige Kombination dieser besteht, und die Glasfasern des Glasfasergewebes, -geleges oder -gitters (18) eine Verlegedichte oder Maschenweite von 2x2 bis 6x6 aufweisen, wobei der Weichmacher ein niedermolekularar Weichmacher ist, dessen Anteil in den das Grundpolymer enthaltenden äußeren Schichten (14, 22, 24) zwischen 25 Gew.-% und 40 Gew.-% liegt, und insbesondere die Kombinationsträgereinlage (16) mit einem Binder auf der Basis zumindest eines Materials aus der Gruppe Styrol-Butadien, Acrylat, PVC, EVA oder eine beliebige Kombination dieser imprägniert ist.

2. Dichtungsbahn nach Anspruch 1,
**dadurch gekennzeichnet,**
**dass** die Glasverstärkung (18) ein Längs- und Querfäden aufweisendes Flächengebilde ist, das aus einer oder mehreren Lagen von parallel verlaufenden, insbesondere gestreckten Fäden besteht, und dass Kreuzungspunkte der Längs- und Querfäden vorzugsweise fixiert sind, insbesondere durch Stoffschluss oder mechanisch durch Reibung und/oder Formschluss.

3. Dichtungsbahn nach zumindest einem der vorhergehenden Ansprüche,
**dadurch gekennzeichnet,**
**dass** der Anteil an niedermolekularem Weichmacher zwischen 25 Gew.-% und 37 Gew.-%, insbesondere zwischen 27 Gew.-% und 35 Gew.-%, liegt.

4. Dichtungsbahn nach zumindest einem der vorhergehenden Ansprüche,
**dadurch gekennzeichnet,**
**dass** das Glasvlies (20) ein Flächengewicht zwischen 30 g/m² und 90 g/m² und/oder die Glasfasern des Glasvlieses (20) eine Dicke zwischen 13 µm und 18 µm aufweisen, und/oder dass das Gewicht der Fasern des Glasgewebes, -geleges oder - gitters (18) 30 tex bis 80 tex beträgt, und/oder dass die Glasfasern des Glasfasergewebes, -geleges oder -gitters (18) eine Verlegedichte oder Maschenweite von 3x3 bis 4x4 aufweisen.

5. Dichtungsbahn nach zumindest einem der vorhergehenden Ansprüche,
**dadurch gekennzeichnet,**
**dass** der niedermolekulare Weichmacher ein Weichmacher auf der Basis von Phthalat, insbesondere aus der Gruppe DPHP (Dipropylheptylphthalat) DINP (Diisonylphthalat), DIDP (Diisodecylphthalat) oder ein phthalatfreier Weichmacher oder ein zumindest teilweise biobasierter Weichmacher ist.

6. Dichtungsbahn nach zumindest einem der vorhergehenden Ansprüche,
**dadurch gekennzeichnet,**
**dass** die Dichtungsbahn (10) ein Flächengewicht 1,4 kg/m² und 2,6 kg/m², insbesondere zwischen 1,5 kg/m² und 1,9 kg/m², aufweist, und/oder dass die Dicke der Dichtungsbahn (10) 1,0 mm und 2,5 mm, insbesondere zwischen 1,2 mm und 2,0 mm, liegt, und/oder dass die Zugfestigkeit in N/50mm in Längsrichtung mindestens 800, vorzugsweise mindestens 1000, insbesondere 1150 bis 1250, und/oder in Querrichtung mindestens 800, vorzugsweise 1080 bis 1110 beträgt, und/oder dass die Dichtungsbahn (10) eine Weiterreißfestigkeit in N in Längsrichtung der Dichtungsbahnen (10) zwischen 180 und 250 und/oder in Querrichtung zwischen 210 und 300 aufweist.

7. Dichtungsbahn nach zumindest einem der vorhergehenden Ansprüche,
**dadurch gekennzeichnet,**
**dass** das Glasvlies (20) entlang bauwerkbereichsabgewandter Außenseite des Glasgewebes, -geleges oder -gitters (18) verläuft, und/oder dass die Dichtungsbahn (10) aus einer bauwerkbereichseitig verlaufenden ersten äußeren Schicht (14), der Kombinationsträgereinlage (16), sowie zumindest einer entlang bauwerkbereichabgewandter Seite der Kombinationsträgereinlage (16) verlaufenden äußeren Schicht (22, 24) besteht.

8. Dichtungsbahn nach zumindest einem der vorhergehenden Ansprüche,
**dadurch gekennzeichnet,**
**dass** die Dichtungsbahn (10) eine oder mehrere Additive aus der Gruppe Füllstoffe, Pigmente, Farbstoffe, UV-Stabilisatoren, Thermostabilisatoren, Biozide enthält.

9. Dichtungsbahn nach zumindest einem der vorhergehenden Ansprüche,
**dadurch gekennzeichnet,**
**dass** entlang bauwerkbereichabgewandter Seite der Kombinationsträgereinlage (16) zwei Schichten, eine Zwischenschicht (22) und die äußere Schicht (24), angeordnet sind.

10. Dichtungsbahn nach zumindest einem der vorhergehenden Ansprüche,
**dadurch gekennzeichnet,**
**dass** insbesondere jede Schicht (14, 22, 24) besteht aus oder enthält in Gew.-%:
| | |
|---|---|
| niedermolekularer Weichmacher | 25- 45, insbesondere 27 - 37 |
| Prozesshilfen, wie Gleitmittel | 0 - 1,9, insbesondere 0,1 - 1,50 |
| Füllstoff, wie Calciumcarbonat | 0 - 20, insbesondere 0 - 15 |
| PVC | 45 - 57, insbesondere 46 - 56 |
| Antioxidant | 0 - 0,2, insbesondere 0,1 - 0,2 |
| UV-Stabilisator | 0 - 0,23, insbesondere 0,1 - 0,23 |
| sonstige Stabilisierungsmittel | 1,5 - 1,8 |
| Farbpigmente außer TiO₂ | 0 - 0,14, insbesondere 0,005 - 0,10 |
| Titandioxid | 1,0 - 12, insbesondere 1 - 8 |
| Flammschutzadditive | 0 - 20, insbesondere 0 - 12 |

11. Dichtungsbahn nach zumindest einem der vorhergehenden Ansprüche,
**dadurch gekennzeichnet,**
**dass** die Glasverstärkung (18) insbesondere senkrecht sich schneidende Kett- und Schussfäden (K, S) aufweist.

12. Dichtungsbahn nach zumindest einem der vorhergehenden Ansprüche,
**dadurch gekennzeichnet,**
**dass** die Glasverstärkung (18) als Einfachkette oder Doppelkette ausgebildet ist.

13. Verfahren zur Herstellung einer Dichtungsbahn (10) nach zumindest einem der vorhergehenden Ansprüche,
**dadurch gekennzeichnet,**
**dass** die äußeren Schichten (14, 24) durch Extrusion oder Kalandrieren oder Streichverfahren hergestellt und sodann mit der Kombinationsträgereinlage (16) verbunden werden.

14. Verfahren zur Herstellung einer Dichtungsbahn (10) nach zumindest einem der Ansprüche 1 bis 13,
**dadurch gekennzeichnet,**
**dass** durch Coextrusion oder Kalanderverfahren oder Streichverfahren die entlang bauwerkbereichabgewandter Seite der Kombinationsträgereinlage (16) verlaufenden Schichten (22, 24) hergestellt werden und dass die coextrudierten Schichten (22, 24), die Kombinationsträgereinlage (16) und die durch Extrusion hergestellten bauwerkbereichseitig verlaufende Schicht (14) in einem einzigen Glättgestell miteinander verbunden werden.

## Claims

1. Multi-layer sealing sheet (10) for a construction field, such as a roof, facade, cellar or tank, having outer layers (14, 22, 24) containing a basic polymer, such as polyvinyl chloride or a polyvinyl chloride copolymer, and a plasticizer, and a combination carrier layer (16) containing a glass mat (20) and a glass reinforcement (18), the glass reinforcement (18) consisting of the group woven glass fabric, non-crimp glass fabric, glass mesh or any combination thereof, and the glass fibres of the woven glass fabric, non-crimp glass fabric or glass mesh (18) having a laying density or mesh width of 2x2 to 6x6,
wherein the plasticiser is a low-molecular-weight plasticiser whose proportion in the outer layers (14, 22, 24) containing the basic polymer is between 25 % by wt. and 40 % by wt., and in particular the combination carrier layer (16) is impregnated with a bonding agent on the basis of at least one material of the group styrene butadiene, acrylate, PVC, EVA or any combination thereof.

2. The sealing web according to Claim 1,
**characterised in that**,
the glass reinforcement (18) is a flat structure with strands running lengthwise and crosswise in either one or more layers of parallel strands in particular stretched strands with the cross points of the lengthwise and crosswise strands preferably being fixed, the securing takes place in particular either by material closure or mechanically by frictional connection and/or form closure (positive locking).

3. The sealing web according to at least one of the preceding claims,
**characterised in that**,
the proportion of low-molecular-weight plasticiser is between 25 wt. % and 37 wt.%, in particular, between 27 wt. % and 35 wt.%.

4. The sealing web according to at least one of the preceding claims,
**characterised in that**,
the glass nonwoven mat (20) has a basis weight between 30 g/m² and 90 g/m² and/or the glass fibres of the glass nonwoven mat (20) have a thickness of between 13 µm and 18 µm, and/or the weight of the fibres of the glass cloth, glass scrim or glass mesh (18) are 30 tex to 80 tex, and/or the glass fibres of the fibreglass cloth, fibreglass scrim or fibreglass mesh (18) have a strand spacing or mesh width of 3x3 to 4x4.

5. The sealing web according to at least one of the preceding claims,
**characterised in that**,
the low-molecular-weight plasticiser is a phthalate-based plasticiser, in particular, a plasticiser from the group DPHP (dipropyl heptyl phthalate) DINP (diisononyl phthalate), DIDP (diisodecyl phthalate) or a plasticiser which is phthalate-free, or at least partially bio-based.

6. The sealing web according to at least one of the preceding claims,
**characterised in that**,
the sealing web (10) has a basis weight of 1.4 kg/m² and 2.6 kg/m², in particular, between 1.5 kg/m² and 1.9 kg/m², and/or the thickness of the sealing web (10) measures between 1.0 mm and 2.5 mm, in particular, between 1.2 mm and 2.0 mm, and/or the tensile strength in N/50 mm in the lengthwise direction measures at least 800, preferably at least 1000, in particular 1150 to 1250, and/or in the crosswise direction at least 800, preferably 1080 to 1110, and/or the sealing web (10) has a tear resistance in N in its lengthwise direction of between 180 and 250 and/or in the crosswise direction of between 210 and 300.

7. The sealing web according to at least one of the preceding claims,
**characterised in that**,
the glass nonwoven mat (20) runs along the outer side of the glass cloth, glass scrim or glass mesh (18) which is facing away from the construction area, and/or the sealing web (10) consists of a first outer layer (14) which is facing the construction area, a combination carrier insert (16), as well as at least one outer layer (22, 24) which runs along the side of the combination carrier insert (16) which is facing away from the construction area.

8. The sealing web according to at least one of the preceding claims,
**characterised in that**,
the sealing web (10) contains one or more of the additives from the group: filling agents, pigments, colour additives, UV stabilisers, thermo-stabilisers, biocide.

9. The sealing web according to at least one of the preceding claims,
**characterised in that**,
the side of the combination carrier insert (16) which is facing away from the construction area has two layers, one middle layer (22) and an outer layer (24).

10. The sealing web according to at least one of the preceding claims,
**characterised in that**,
in particular, each layer (14, 22, 24) contains or consists of wt.%:
| | |
|---|---|
| low-molecular-weight plasticiser | 25 - 45, in particular, 27 - 37 |
| Processing additives like lubricants | 0 - 1.9, in particular, 0.1 - 1.50 |
| Filling agents like calcium carbonate | 0 -20, in particular, 0 - 15 |
| PVC | 45 - 57, in particular, 46 - 56 |
| Antioxidant | 0 - 0.2, in particular, 0.1 - 0.2 |
| UV stabiliser | 0 - 0.23, in particular, 0.1 - 0.23 |
| other stabilisers | 1.5 - 1.8 |
| Colour pigments except TiO₂ | 0 - 0.14, in particular, 0.005 - 0.10 |
| Titanium dioxide | 1.0 - 12, in particular, 1 - 8 |
| Flame retardant additives | 0 - 20, in particular, 0 - 12 |

11. The sealing web according to at least one of the preceding claims,
**characterised in that**,
the glass reinforcement (18) has especially perpendicularly intersecting warp and weft strands (K, S).

12. The sealing web according to at least one of the preceding claims,
**characterised in that**,
the glass reinforcement (18) has a single or double warp structure.

13. A method for producing a sealing web (10) according to at least one of the preceding claims,
**characterised in that**,
the outer layers (14, 24) are produced by extrusion, calendaring, or by brushing, and then joined to the combination carrier insert (16).

14. A method for producing a sealing web (10) according to at least one of the Claims 1 to 13,
**characterised in that**,
the layers (22, 24) which run along the side of the combination carrier insert facing away from the construction area, are produced by coextrusion or the calendering or brushing process, and that the coextruded layers (22, 24), the combination carrier insert (16) and the layer (14) which was produced by extrusion and runs along the side being facing the construction area, are all joined to together by a single stack of calenders.

## Revendications

1. Bande d'étanchéité multicouche (10) pour une zone de construction telle qu'un toit, une façade, une cave, un bassin, présentant des couches extérieures (14, 22, 24), lesquelles contiennent un polymère de base, tel que le chlorure de polyvinyle, ou un copolymère de chlorure de polyvinyle, et un plastifiant, ainsi qu'une couche de support combinée (16) contenant un non-tissé de verre (20) et un renfort de verre (18), sachant que le renfort de verre (18) est sélectionné parmi le groupe tissu de verre, nappe de verre ou grille de verre ou toute autre combinaison de ces derniers, et que les fibres de verre du tissu, de la nappe ou de la grille de fibres de verre (18) présentent une densité de pose ou une taille de mailles située entre 2x2 et 6x6,
sachant que le plastifiant est un plastifiant de faible poids moléculaire dont le pourcentage dans les couches extérieures (14, 22, 24) contenant le polymère de base est compris entre 25 % et 40 % en poids, et en particulier que la couche de support combinée (16) est imprégnée d'un liant sur la base d'au moins un matériau choisi parmi le groupe styrène-butadiène, acrylate, PVC, EVA ou une combinaison quelconque de ces derniers.

2. Bande d'étanchéité selon la revendication 1,
**caractérisée en ce que**
le renfort de verre (18) est une structure plane présentant des fils longitudinaux et transversaux, laquelle est constituée d'une ou de plusieurs couches de fils parallèles, en particulier de fils tendus, et que les points de croisement des fils longitudinaux et transversaux sont de préférence fixés, en particulier par adhérence de matière ou mécaniquement par frottement et/ou par adhérence de forme.

3. Bande d'étanchéité selon au moins l'une des revendications précédentes,
**caractérisée en ce que**
le pourcentage de plastifiant de faible poids moléculaire se situe entre 25 % et 37 % en poids, en particulier entre 27 % et 35 % en poids.

4. Bande d'étanchéité selon au moins l'une des revendications précédentes,
**caractérisée en ce que**
le non-tissé de verre (20) présente un grammage entre 30 g/m² et 90 g/m² et/ou que les fibres de verre du non-tissé de verre (20) présentent une épaisseur comprise entre 13 µm et 18 µm, et/ou que le poids des fibres du tissu, de la nappe ou de la grille de verre (18) est compris entre 30 tex et 80 tex, et/ou que les fibres de verre du tissu, de la nappe ou de la grille de fibres de verre (18) présentent une densité de pose ou une taille de mailles située entre 3x3 et 4x4.

5. Bande d'étanchéité selon au moins l'une des revendications précédentes,
**caractérisée en ce que**
le plastifiant de faible poids moléculaire est un plastifiant à base de phtalate, en particulier du groupe DPHP (dipropylheptyl phtalate) DINP (diisonyl phtalate), DIDP (diisodécyl phtalate) ou un plastifiant sans phtalate ou un plastifiant au moins partiellement biosourcé.

6. Bande d'étanchéité selon au moins l'une des revendications précédentes,
**caractérisée en ce que**
la bande d'étanchéité (10) présente un grammage situé entre 1,4 kg/m² et 2,6 kg/m², en particulier entre 1,5 kg/m² et 1,9 kg/m², et/ou que l'épaisseur de la bande d'étanchéité (10) se situe entre 1,0 mm et 2,5 mm, en particulier entre 1,2 mm et 2,0 mm, et/ou que la résistance à la traction en N/50mm dans la direction longitudinale s'élève au moins à 800, de préférence au moins 1000, en particulier entre 1150 et 1250, et/ou dans la direction transversale au moins à 800, de préférence entre 1080 et 1110, et/ou que la bande d'étanchéité (10) présente une résistance à la propagation du déchirement en N dans la direction longitudinale des bandes d'étanchéité (10) entre 180 et 250 et/ou dans la direction transversale entre 210 et 300.

7. Bande d'étanchéité selon au moins l'une des revendications précédentes,
**caractérisée en ce que**
le non-tissé de verre (20) s'étend le long du côté extérieur du tissu, de la nappe ou de la grille de verre (18) opposé à la zone de construction, et/ou que la bande d'étanchéité (10) est constituée d'une première couche extérieure (14), la couche de support combinée (16), ladite première couche s'étendant du côté de la zone de construction, ainsi que d'au moins une couche extérieure (22, 24) s'étendant le long du côté de la couche de support combinée (16) opposé à la zone de construction.

8. Bande d'étanchéité selon au moins l'une des revendications précédentes,
**caractérisée en ce que**
la bande d'étanchéité (10) contient un ou plusieurs additifs choisis parmi le groupe agents de charge, pigments, colorants, stabilisateurs UV, stabilisateurs thermiques, biocides.

9. Bande d'étanchéité selon au moins l'une des revendications précédentes,
**caractérisée en ce que**
deux couches, une couche intermédiaire (22) et la couche extérieure (24) sont disposées le long du côté de la couche de support combinée (16) opposé à la zone de construction.

10. Bande d'étanchéité selon au moins l'une des revendications précédentes,
**caractérisée en ce que**
en particulier chaque couche (14, 22, 24) est composée ou contient en % en poids :
| | |
|---|---|
| Plastifiant de faible poids moléculaire | 25 - 45, en particulier 27 - 37 |
| Agents de traitement tels que lubrifiants | 0 - 1,9, en particulier 0,1 - 1,50 |
| Agent de charge tel que du carbonate de calcium | 0 - 20, en particulier 0 - 15 |
| PVC | 45 - 57, en particulier 46 - 56 |
| Antioxidant | 0 - 0,2, en particulier 0,1 - 0,2 |
| Stabilisateur UV | 0 - 0,23, en particulier 0,1 - 0,23 |
| Autres agents de stabilisation | 1,5 - 1,8 |
| Pigments colorés autres que TiO₂ | 0 - 0,14, en particulier 0,005 - 0,10 |
| Dioxyde de titane | 1,0 - 12, en particulier 1 - 8 |
| Additifs ignifuges | 0 - 20, en particulier 0 - 12 |

11. Bande d'étanchéité selon au moins l'une des revendications précédentes,
**caractérisée en ce que**
le renfort de verre (18) présente en particulier des fils de chaîne et de trame (K, S) se croisant perpendiculairement.

12. Bande d'étanchéité selon au moins l'une des revendications précédentes,
**caractérisée en ce que**
le renfort de verre (18) est conçu sous forme d'une chaîne simple ou d'une chaîne double.

13. Procédé de fabrication d'une bande d'étanchéité (10) selon au moins l'une des revendications précédentes,
**caractérisée en ce que**
les couches extérieures (14, 24) sont fabriquées par extrusion ou calandrage ou cardage et sont ensuite reliées à la couche de support combinée (16).

14. Procédé de fabrication d'une bande d'étanchéité (10) selon au moins l'une des revendications 1 à 13,
**caractérisée en ce que**
les couches (22, 24) s'étendant le long du côté de la couche de support combinée (16) opposé à la zone de construction sont fabriquées par coextrusion ou calandrage ou cardage et que les couches coextrudées (22, 24), la couche de support combinée (16) et la couche (14) s'étendant du côté de la zone de construction et fabriquée par extrusion sont reliées entre elles dans un support de lissage.
